# EUROPÄISCHE PATENTSCHRIFT

(11) **EP 2 722 114 B1**
(45) Veröffentlichungstag und Bekanntmachung des Hinweises auf die Patenterteilung: **06.02.2019**
(21) Anmeldenummer: 13187533.8
(22) Anmeldetag: 07.10.2013
(51) Int. Cl.: B21D 43/06, B21D 43/10, B23K 37/04, B25J 15/00, B25J 15/02, B25B 5/04

(54) **Vorrichtung zum Handhaben von Werkstücken, insbesondere von Bearbeitungsprodukten einer schneidenden Blechbearbeitung, sowie maschinelle Anordnungen mit einer derartigen Vorrichtung**
Device for handling workpieces, in particular the products of a sheet metal cutting process and machine configurations comprising such a device
Dispositif de manipulation de pièces, notamment de pièces issues d' opérations de découpe de tôles et agencements mécaniques dotés d'un tel dispositif

(30) Priorität: 19.10.2012 DE 102012219127
(43) Veröffentlichungstag der Anmeldung: 23.04.2014
(73) Patentinhaber: Trumpf Sachsen GmbH, 01904 Neukirch (DE)
(72) Erfinder: Bauch, Heiko, 02526 Bautzen (DE); Protze, Christoph, 02696 Singwitz (DE)
(74) Vertreter: Kohler Schmid Möbus Patentanwälte

(56) Entgegenhaltungen:
- EP-A1- 1 970 139
- DE-U1- 20 110 628
- GB-A- 2 254 598

## Beschreibung

Die Erfindung betrifft eine Vorrichtung zum Handhaben von Werkstücken, insbesondere von Werkstücken in Form von Bearbeitungsprodukten einer schneidenden Blechbearbeitung, mit einem mittels einer Halteorganlagerung an einer Tragstruktur beweglich gelagerten Halteorgan und mit einem Halteorganantrieb, der einen Antriebsmotor aufweist, mittels dessen das Halteorgan sowohl mit einer längs einer Hubachse ausgeführten Hubbewegung als auch mit einer in Querrichtung der Hubachse ausgeführten Querbewegung bewegbar ist,
- wobei das Halteorgan zur Ausführung der Querbewegung mittels einer Querführungseinrichtung geführt und aufgrund der geführten Querbewegung aus einer Außerfunktionsstellung in eine Funktionsstellung und/oder aus einer Funktionsstellung in eine Außerfunktionsstellung bewegbar ist,
- wobei von dem Halteorgan in der Funktionsstellung ein Rand eines Werkstückes hintergreifbar ist,
- wobei von dem Halteorgan in der Außerfunktionsstellung ein Rand eines Werkstückes nicht hintergreifbar ist,
- wobei bei in die Außerfunktionsstellung bewegtem Halteorgan die Querführungseinrichtung des Halteorgans mittels des Antriebsmotors relativ zu dem Halteorgan längs der Hubachse aus einer der Außerfunktionsstellung des Halteorgans zugeordneten Außerfunktionshublage in eine der Funktionsstellung des Halteorgans zugeordneten Funktionshublage bewegbar ist und/oder
- wobei bei in die Funktionsstellung bewegtem Halteorgan und bei in die Funktionshublage bewegter Querführungseinrichtung des Halteorgans die Querführungseinrichtung mittels des Antriebsmotors relativ zu dem Halteorgan längs der Hubachse aus der Funktionshublage in die Außerfunktionshublage bewegbar ist,
- wobei aufgrund der mittels des Antriebsmotors bewirkten Bewegung der Querführungseinrichtung aus der Außerfunktionshublage in die Funktionshublage das Halteorgan bei ortsunveränderlicher Halteorganlagerung mit einer Querbewegung aus der Außerfunktionsstellung in die Funktionsstellung bewegbar ist und
- wobei aufgrund der mittels des Antriebsmotors bewirkten Bewegung der Querführungseinrichtung aus der Funktionshublage in die Außerfunktionshublage das Halteorgan bei ortsunveränderlicher Halteorganlagerung mit einer Querbewegung aus der Funktionsstellung in die Außerfunktionsstellung bewegbar ist.

Die Erfindung betrifft des Weiteren eine mit einer Vorrichtung der vorstehenden Art versehene maschinelle Anordnung zum Zu- und/oder zum Abführen von Werkstücken an einer Werkzeugmaschine, insbesondere zum Zu- und/oder zum Abführen von Bearbeitungsprodukten an einer Werkzeugmaschine zur schneidenden Bearbeitung von Blechen.

Die Erfindung betrifft schließlich auch eine maschinelle Anordnung zum Bearbeiten von Werkstücken, insbesondere zum schneidenden Bearbeiten von Blechen, mit einer Werkzeugmaschine für die Werkstückbearbeitung, gegebenenfalls für die schneidende Blechbearbeitung, sowie mit einer vorstehend beschriebenen maschinellen Anordnung zum Zu- und/oder zum Abführen von Werkstücken, mittels derer der Werkzeugmaschine Werkstücke zuführbar und/oder mittels derer Werkstücke von der Werkzeugmaschine abführbar sind.

Gattungsgemäßer Stand der Technik ist bekannt aus GB 2 254 598 A. Diese Druckschrift offenbart eine Greifvorrichtung mit einem Hubkolben und einem Greifkolben, die im Innern eines Zylinders der Greifvorrichtung längs der Zylinderachse gegeneinander versetzt angeordnet und beweglich geführt sind. Ein axialer Fortsatz des Greifkolbens ragt aus dem Zylinder in axialer Richtung vor. An dem freien Ende des axialen Fortsatzes des Greifkolbens ist ein Greifer angebracht, der seinerseits an einem Zylinderdeckel des Zylinders in axialer Richtung beweglich geführt ist. Eine Kolbenstange ist an dem Hubkolben angebracht und erstreckt sich ausgehend von dem Hubkolben durch den Greifkolben hindurch bis zu dem Greifer. Eine als Schraubenfeder ausgebildete Druckfeder ist zwischen dem Hubkolben und dem Greifkolben angeordnet und sitzt auf der Kolbenstange mit dieser konzentrisch auf. Das auf Höhe des Greifers liegende freie Ende der Kolbenstange ist mit einem in radialer Richtung der Kolbenstange vorstehenden Lagerzapfen versehen. Der Lagerzapfen an der Kolbenstange greift in zwei Lageröffnungen ein, von denen jeweils eine an einem Ende des Querbalkens eines T-förmigen Hebels vorgesehen ist. An dem gegenüberliegenden Ende des Querbalkens sind die beiden T-förmigen Hebel jeweils mittels eines Achszapfens an dem Greifer schwenkbar gelagert. Die Längsbalken der beiden T-förmigen Hebel bilden Finger aus, die in Querrichtung der Kolbenstange voneinander beabstandet sind.

Ausgehend von dem Außerfunktionszustand der Greifvorrichtung wird der Hubkolben an der von dem Greifkolben abliegenden Seite mit Druckluft beaufschlagt. Infolgedessen bewegt sich der Hubkolben längs der Achse des Zylinders. Aufgrund der über die Druckfeder bewirkten Abstützung an dem Greifkolben nimmt der Hubkolben bei seiner Bewegung längs der Achse des Zylinders den Greifkolben in Bewegungsrichtung mit. Dabei bleiben die axiale Erstreckung der Druckfeder und folglich der in axialer Richtung des Zylinders zwischen dem Hubkolben und dem Greifkolben bestehende Abstand zunächst unverändert.

Im Laufe seiner Bewegung längs der Achse des Zylinders läuft der Greifkolben auf den Zylinderdeckel auf. Durch den Zylinderdeckel werden der Greifkolben und der an diesem angebrachte Greifer gegen eine weitere Bewegung längs der Achse des Zylinders blockiert. Nicht blockiert wird der Hubkolben, der aufgrund seiner Druckbeaufschlagung die Bewegung längs der Achse des Zylinders fortsetzt. Infolgedessen bewegt sich der Hubkolben relativ zu dem gegen eine Weiterbewegung blockierten Greifkolben. Damit verbunden ist eine Bewegung der an dem Hubkolben angebrachten Kolbenstange relativ zu dem mit dem Greifkolben verbundenen Greifer. Infolgedessen werden die über den Lagerzapfen an die Kolbenstange angebundenen T-förmigen Hebel um die Achszapfen geschwenkt und dadurch die an den T-förmigen Hebeln ausgebildeten Finger ausgehend von ihrer anfangs parallelen Ausrichtung gespreizt. Auf diese Art und Weise werden die Finger der beiden T-förmigen Hebel aus ihrer Außerfunktionsstellung in die Funktionsstellung bewegt. Bei in die Funktionsstellung bewegten Fingern befindet sich der als Querführungseinrichtung der Finger fungierende und an dem freien Ende der Kolbenstange vorgesehene Lagerzapfen in der Funktionshublage.

Wird nach dem Spreizen der Finger der Hubkolben an der von dem Greifkolben abliegenden Seite druckentlastet und der Greifkolben an der von dem Hubkolben abliegenden Seite druckbeaufschlagt, so bewegt sich zunächst der Hubkolben relativ zu dem Greifkolben längs der Achse des Zylinders in eine Position zurück, in welcher er wieder den anfänglichen Abstand von dem Greifkolben aufweist. Infolge der Bewegung des Hubkolbens relativ zu dem Greifkolben führt die Kolbenstange eine entsprech-ende Bewegung relativ zu dem Greifer aus. Infolgedessen werden die Finger aus der gespreizten Stellung/Funktionsstellung zurück in die Parallelstellung/ Außerfunktionsstellung geschwenkt. Der Lagerzapfen an der Kolbenstange bewegt sich aus der Funktionshublage zurück in die Außerfunktionshublage.

Erst nach dem Überführen der Finger aus der Funktionsstellung in die Außerfunktionsstellung und des Lagerzapfens aus der Funktionshublage in die Außerfunktionshublage wird der Greifer mit den daran angelenkten T-förmigen Hebeln unter der Wirkung der Druckbeaufschlagung des Greifkolbens und des Hubkolbens längs der Achse des Zylinders in Richtung auf den Zylinderdeckel bewegt Weiterer Stand der Technik ist bekannt aus DE 201 10 628 U1. Diese Druckschrift betrifft eine Transporteinrichtung mit einem Tragrahmen, an welchem eine Vorrichtung zum Handhaben von zu transportierenden Gegenständen angebracht ist. Die genannte Vorrichtung umfasst als Halteorgan einen Greifhaken, der in einer Funktionsstellung einen zu transportierenden Gegenstand hintergreift und in Schwerkraftrichtung lagert. Die dabei auf den Greifhaken wirkende Last wird über einen an dem Tragrahmen befestigten und in eine langlochartige Öffnung an dem Greifhaken eingreifenden Stift in den Tragrahmen abgeleitet. Befindet sich der Greifhaken in der Funktionsstellung, so kann ein an dem Greifhaken gelagerter Gegenstand durch entsprechende Bewegung des Tragrahmens mit einer vertikalen Hubbewegung angehoben und abtransportiert werden. In die Funktionsstellung, in welcher er einen zu transportierenden Gegenstand hintergreift und auch in eine Außerfunktionsstellung, in welcher er gegenüber einem zu transportierenden Gegenstand zurückgezogen ist, kann der Greifhaken mittels eines Antriebsmotors in Form einer pneumatischen Kοlben-Zylinder-Einheit bewegt werden. Bei seinen Bewegungen wird der Greifhaken durch Führungseinrichtungen an dem Tragrahmen der Transporteinrichtung derart geführt, dass er eine bogenförmige Bewegungsbahn beschreibt. Entlang der bogenförmigen Bewegungsbahn, die sich aufgrund der gegenseitigen Überlagerung einer vertikalen und einer horizontalen Greifhakenbewegung ergibt, schwenkt der von der pneumatischen Kolben-Zylinder-Einheit angetriebene Greifhaken mit einer zweiachsigen Bewegung in die Funktionsstellung oder in die Außerfunktionsstellung. Damit der Greifhaken bogenförmige Bewegungen in die Funktionsstellung und in die Außerfunktionsstellung ausführen kann, muss ein entsprechend großer Bewegungsraum zur Verfügung stehen.

Ausgehend von dem Stand der Technik liegt der Erfindung die Aufgabe zugrunde, eine funktionssichere Handhabung von Werkstücken auch bei stark beengten räumlichen Verhältnissen an dem zu handhabenden Werkstück zu ermöglichen.

Erfindungsgemäß gelöst wird diese Aufgabe durch die Vorrichtung nach Patentanspruch 1 und durch die maschinellen Anordnungen nach den Patentansprüchen 12 und 13.

Im Falle der Erfindung dient der für die Querbewegung des Halteorgans genutzte Antriebsmotor auch dazu, das in die Funktionsstellung überführte Halteorgan und gegebenenfalls das Werkstück, welches von dem in der Funktionsstellung befindlichen Halteorgan hintergriffen wird, längs der Hubachse zu bewegen. Die Mehrfachfunktion des Antriebsmotors der erfindungsgemäßen Vorrichtung trägt zu platzsparenden Verhältnissen im Falle der Erfindung bei.

Bei in der Außerfunktionsstellung befindlichem Halteorgan und/oder bei in der Funktionsstellung befindlichem Halteorgan kann die Querführungseinrichtung des Halteorgans mittels des Antriebsmotors relativ zu dem Halteorgan längs der Hubachse bewegt werden. Dadurch gelangt die Querführungseinrichtung längs der Hubachse aus einer der Außerfunktionsstellung des Halteorgans zugeordneten Außerfunktionshublage in eine der Funktionsstellung des Halteorgans zugeordnete Funktionshublage oder in Gegenrichtung aus einer Funktionshublage in eine Außerfunktionshublage. Infolge der Bewegung der Querführungseinrichtung längs der Hubachse führt das Halteorgan eine Querbewegung in Querrichtung der Hubachse aus. Durch die Querbewegung wird das Halteorgan aus der Außerfunktionsstellung in die Funktionsstellung bzw. aus der Funktionsstellung in die Außerfunktionsstellung überführt. Die Halteorganlagerung an der zugeordneten Tragstruktur verändert dabei ihre Lage nicht. Insbesondere bewegt sich die Halteorganlagerung nicht auf einer Bewegungsbahn, die einen sich sowohl längs der Hubachse als auch quer dazu erstreckenden Bewegungsraum benötigen würde. Infolgedessen kann von dem Antriebsmotor auf engstem Raum ein Hintergriff des Halteorgans an dem zu handhabenden Werkstück hergestellt oder ein derartiger Hintergriff aufgehoben werden. Die Halteorganlagerung führt zur Herstellung und/oder zum Aufheben des Hintergriffs an dem betreffenden Werkstück keine mit einem entsprechenden Raumbedarf verbundene zweiachsige Bewegung mit einer Komponente längs der Hubachse und einer Komponente quer dazu aus.

Aufgrund der besonderen Kinematik des Halteorgans beim Herstellen und Aufheben eines Hintergriffs an einem zu handhabenden Werkstück ist die Vorrichtung gemäß Patentanspruch 1 in besonderem Maße dazu geeignet, Werkstücke an dem Rand einer im Werkstückinneren gelegenen Werkstücköffnung zu lagern. Mittels einer externen Antriebseinrichtung kann das in der Außerfunktionsstellung befindliche Halteorgan längs der Hubachse in eine Position bewegt werden, in welcher es so weit in die Werkstücköffnung eintaucht, dass zur Herstellung des Hintergriffs des Halteorgans an dem Rand der Werkstücköffnung lediglich noch die Querführungseinrichtung längs der Hubachse relativ zu dem Halteorgan zu bewegen ist. Aufgrund der von der Querführungseinrichtung relativ zu dem Halteorgan ausgeführten Bewegung aus der Außerfunktionshublage in die Funktionshublage bewegt sich das Halteorgan mit einer Querbewegung aus der Außerfunktionsstellung in die Funktionsstellung, ohne dass es zu diesem Zweck einer Bewegung der Halteorganlagerung bedürfte. Entsprechend kann ein an dem Rand einer Werkstücköffnung im Inneren eines Werkstückes hergesteliter Hintergriff des Halteorgans gelöst werden, ohne dass hierfür eine Positionsänderung der Halterorganlagerung erforderlich wäre.

Besondere Ausführungsarten der Vorrichtung nach Patentanspruch 1 und der maschinellen Anordnungen nach den Patentansprüchen 12 und 13 ergeben sich aus den abhängigen Patentansprüchen 2 bis 11.

Im Falle der Erfindungsbauart nach Patentanspruch 2 wird das Halteorgan in der Funktionsstellung und somit der Hintergriff des Halteorgans an einem zu handhabenden Werkstück dadurch gesichert, dass die Querführungseinrichtung des Halteorgans, die in eine der Funktionsstellung des Halteorgans zugeordnete Funktionshublage bewegt ist, das Halteorgan gegen eine durch eine Belastung des Halteorgans bewirkte Rückstellbewegung in die Außerfunktionsstellung blockiert. Mit der Sicherung des Halteorgans in der Funktionsstellung geht eine Sicherung des zu handhabenden Werkstückes gegen ein unerwünschtes Lösen von der erfindungsgemäßen Handhabungsvorrichtung einher. Nachdem die Querführungseinrichtung des Halteorgans auch die beschriebene Sicherungsfunktion übernimmt, erübrigt sich eine eigens zu diesem Zweck vorzusehende Zusatzeinrichtung. Damit verbunden ist eine konstruktiv einfache und kompakte Bauweise der Gesamtvorrichtung.

Konstruktiv besonders einfach gestaltet sich die Sicherung des in die Funktionsstellung bewegten Halteorgans gegen eine Rückstellbewegung in die Außerfunktionsstellung dann, wenn zu diesem Zweck das Halteorgan und die in die Funktionshublage bewegte Querführungseinrichtung des Halteorgans selbsthemmend aneinander gelagert sind (Patentanspruch 3). Durch die selbsthemmende gegenseitige Lagerung des in die Funktionsstellung bewegten Halteorgans und der in die Funktionshublage bewegten Querführungseinrichtung wird verhindert, dass sich die Querführungseinrichtung allein aufgrund einer Belastung des Halteorgans, die beispielsweise von einem an dem Halteorgan gelagerten Werkstück herrühren kann, aus der Funktionshublage längs der Hubachse in die Außerfunktionshublage bewegt. Mit der Bewegung der Querführungseinrichtung in die Außerfunktionshublage wäre eine uner-wünscht Überführung des Halteorgans aus der Funktionsstellung in die Außerfunktionsstellung und somit ein unerwünschtes Lösen des von dem Halteorgan hintergriffenen Werkstückes von der Handhabungsvorrichtung verbunden.

In weiterer vorteilhafter Ausgestaltung der Erfindung ist gemäß Patentanspruch 4 vorgesehen, dass bei der von der Querführungseinrichtung des Halteorgans relativ zu dem Halteorgan längs der Hubachse ausgeführten Bewegung aus der Außerfunktionshublage in die Funktionshublage das Halteorgan in Gegenrichtung der Bewegungsrichtung der Querführungseinrichtung kraftbeaufschlagt ist. Durch die Kraftbeaufschlagung des Halteorgans wird sichergestellt, dass die Querführungseinrichtung bei ihrer Bewegung längs der Hubachse das Halteorgan nicht mitnimmt und dass dementsprechend die für das Umschalten des Halteorgans aus der Außerfunktionsstellung in die Funktionsstellung erforderliche Bewegung der Querführungseinrichtung relativ zu dem Halteorgan auch tatsächlich ausgeführt wird.

Im Falle der erfindungsgemäßen Vorrichtung nach Patentanspruch 5 sind die Halteorganlagerung und die Querführungseinrichtung des Halteorgans an einer gemeinsamen Tragstruktur vorgesehen. Die Querführungseinrichtung ist an der gemeinsamen Tragstruktur relativ zu dem in die Außerfunktionsstellung und/oder relativ zu dem in die Funktionsstellung bewegten Halteorgan längs der Hubachse bewegbar geführt. Auf diese Art und Weise bilden das Halteorgan, die Querführungseinrichtung des Halteorgans und die gemeinsame Tragstruktur eine kompakte Einheit. Zur gemeinschaftlichen Hubbewegung des in die Funktionsstellung bewegten Halteorgans und der in die Funktionshublage bewegten Querführungseinrichtung kann der Antriebsmotor des Halteorganantriebes die gemeinsame Tragstruktur mit der daran vorgesehenen Halteorganlagerung und der daran vorgesehenen Querführungseinrichtung längs der Hubachse bewegen.

Außerdem bietet die gemeinsame Tragstruktur für das Halteorgan und die Querführungseinrichtung des Halteorgans eine Möglichkeit, die in bevorzugter Ausgestaltung der Erfindung zur Gewährleistung der erforderlichen Relativbewegung der Querführungseinrichtung gegenüber dem Halteorgan vorgesehene Kraftbeaufschlagung des Halteorgans zu realisieren (Patentanspruch 6).

Mit einer Kolben-Zylinder-Einheit ist im Falle der erfindungsgemäßen Vorrichtung nach Patentanspruch 7 für den Halteorganantrieb eine in der Praxis bewährte und bezüglich ihrer Funktionen einfach und präzise steuerbare Antriebsmotorbauart vorgesehen.

Zur Minimierung der Reibung, die mit der Führung des Halteorgans durch die sich längs der Hubachse bewegende Querführungseinrichtung verbunden ist, weist die Querführungseinrichtung in bevorzugter Ausgestaltung der Erfindung Führungsrollen zur Führung des Halteorgans bei dessen Querbewegung auf (Patentanspruch 8).

Für das Halteorgan der erfindungsgemäßer Vorrichtung sind grundsätzlich unterschiedliche Bauarten denkbar. Möglich ist beispielsweise ein Halteorgan, das nach Art eines Schiebers mit einer linearen Querbewegung in die Funktionsstellung und/oder in die Außerfunktionsstellung überführt wird.

Erfindungsgemäß bevorzugt wird ausweislich der Patentansprüche 9 und 10 ein Halteorgan in Form eines an der Tragstruktur beweglich gelagerten Schwenkhebels, der mittels des Antriebsmotors des Halteorganantriebes über die Querführungseinrichtung in eine Funktions-Schwenkstellung und/oder in eine Außerfunktions-Schwenkstellung bewegt werden kann. Schwenkbare Halteorgane zeichnen sich gegenüber linear bewegten Halteorganen durch eine weniger reibungsbehaftete Beweglichkeit aus.

An einem zweiarmigen Schwenkhebel, wie er ausweislich Patentanspruch 10 in weiterer bevorzugter Ausgestaltung der Erfindung vorgesehen ist, kann ein erster Hebelarm das erfindungsgemäße Halteorgan ausbilden und der zweite Hebelarm zur Erzeugung der Querbewegung des von dem ersten Hebelarm gebildeten Halteorgans in die Funktionsstellung oder in die Außerfunktionsstellung genutzt werden. Insbesondere bietet der zweite Hebelarm des zweiarmigen Schwenkhebels eine konstruktiv einfache aber gleichwohl funktionssichere Möglichkeit, die Querführungseinrichtung und den als Halteorgan dienenden ersten Hebelarm zur Vermeidung einer ungewollten Rückstellbewegung des ersten Hebelarms aus der Funktionsstellung in die Außerfunktionssteilung selbsthemmend aneinander zu lagern.

Eine weitere bevorzugte Erfindungsbauart ist Gegenstand von Patentanspruch 11.

An einer derartigen erfindungsgemäßen Vorrichtung sind zwei Halteorgane vorgesehen, die mittels des Antriebsmotors des Halteorganantriebes in Querrichtung der Hubachse gegenläufig angetrieben werden können. Infolgedessen eignet sich die Vorrichtung nach Patentanspruch 11 insbesondere für Anwendungsfälle, in denen zum Handhaben von Werkstücken Werkstücköffnungen genutzt werden, die im Werkstückinneren angeordnet sind. Durch gegenläufige Querbewegungen können die beiden Halteorgane gemeinschaftlich in ihre Funktionsstellung überführt werden, in welcher sie den Rand der Werkstücköffnung einander gegenüberliegend hintergreifen. Entsprechend besteht die Möglichkeit, beide Halteorgane gemeinschaftlich aus der Funktions-, das heißt aus der Hintergriffsstellung, in die Außerfunktionsstellung zu überführen, in welcher der zuvor bestehende Hintergriff aufgehoben ist. Jedes der beiden Halteorgane verfügt über eine Querführungseinrichtung, die zur Erzeugung der Querbewegung des jeweils zugeordneten Halteorgans längs der Hubachse bewegt wird. Der Einfachheit halber können die beiden Querführungseinrichtungen zur gemeinschaftlichen Bewegung längs der Hubachse miteinander verbunden sein.

Nachfolgend wird die Erfindung anhand beispielhafter schematischer Darstellungen näher erläutert. Es zeigen:
- Figur 1: eine maschinelle Anordnung für die Blechbearbeitung mit eine Laser-Schneidmaschine und mit einer Handlingvorrichtung zum Abführen von Bearbeitungsprodukten von der Laser-Schneidmaschine,
- Figur 2: eine an der Handlingvorrichtung gemäß Figur 1 vorgesehene Vorrichtung zum Handhaben von Bearbeitungsprodukten und
- Figuren 3 bis 8: Darstellungen zur Veranschaulichung der Funktionsweise der Vorrichtung gemäß Figur 2.

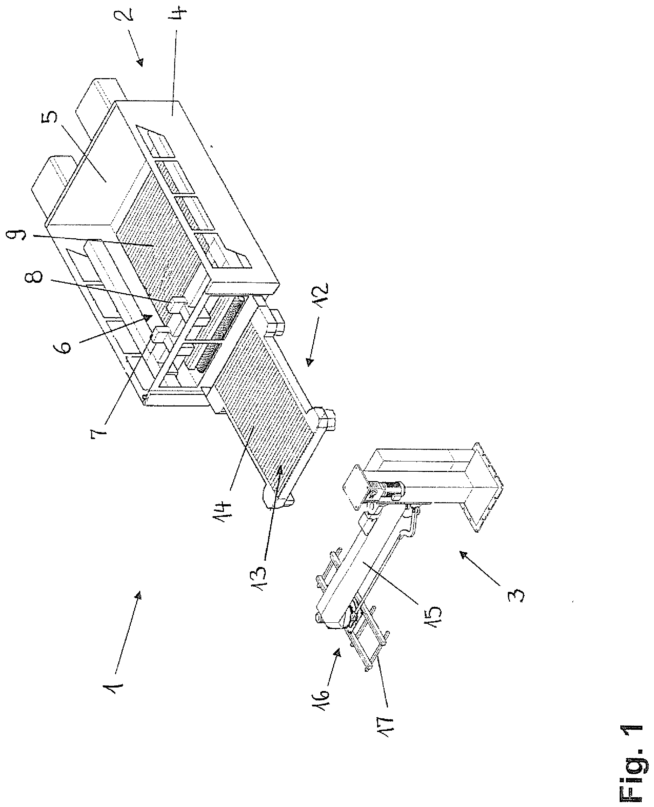

Gemäß Figur 1 umfasst eine maschinelle Anordnung 1 für die Blechbearbeitung als Werkzeugmaschine eine Laser-Schneidmaschine 2 und außerdem eine Handlingvorrichtung 3, die als maschinelle Anordnung zum Zu- und zum Abführen von Werkstücken an der Laser-Schneidmaschine 2 genutzt werden kann, die in dem dargestellten Beispielsfall aber lediglich zum Abführen von Bearbeitungsprodukten von der Laser-Schneidmaschine 2 dient. Die Laser-Schneidmaschine 2 besitzt einen von einer Einhausung 4 begrenzten Arbeitsbereich 5, in dem eine Schneideinheit 6 mit Laser-Schneidköpfen 7, 8 in gewohnter Weise in einer horizontalen Bewegungsebene über eine Werkstückauflage 9 verfährt.

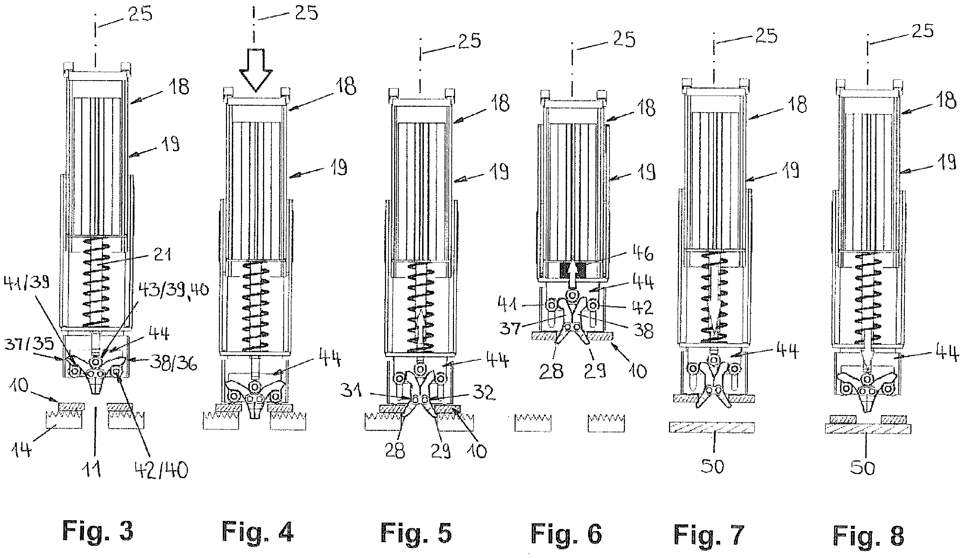

Ein zu bearbeitendes Blech wird dem Arbeitsbereich 5 der Laser-Schneidmaschine 2 als unbearbeitetes und der Übersichtlichkeit halber in Figur 1 nicht dargestelltes Rohblech zugeführt. Mittels der Laser-Schneidköpfe 7, 8 der Schneideinheit 6 werden aus dem Blech als Bearbeitungsprodukte Fertigteile und ein in den Figuren 3 bis 8 angedeutetes Restgitter 10 erstellt. Nach Beendigung oder im Laufe der eigentlichen Fertigungsarbeiten versehen die Laser-Schneidköpfe 7, 8 das Restgitter 10 außerdem mit Werkstück- beziehungsweise Restgitteröffnungen 11.

Die Rohblechzufuhr in den Arbeitsbereich 5 der Laser-Schneidmaschine 2 erfolgt ausgehend von einem Palettenwechsler 12, der vor der Laser-Schneidmaschine 2 aufgestellt ist. An dem Palettenwechsler 12 ist das unbearbeitete Blech auf einem Auflagerost einer Palette 13 abgelegt. In gewohnter Weise wird der Auflagerost der Palette 13 von einer Mehrzahl von Auflageleisten 14 gebildet, die mit gegenseitigem Abstand parallel zueinander verlaufen und die sowohl ein zu bearbeitendes Rohblech als auch die Bearbeitungsprodukte, insbesondere das Restgitter 10, auf Spitzen lagern.

Gemeinschaftlich mit der Palette 13 wird ein unbearbeitetes Blech von dem Palettenwechsler 12 zur schneidenden Bearbeitung in den Arbeitsbereich 5 der Laser-Schneidmaschine 2 transferiert. Nach Beendigung der schneidenden Bearbeitung wird die Palette 13 mit den nun vorliegenden Fertigteilen und dem Restgitter 10 zurück auf den Palettenwechsler 12 bewegt.

Die Fertigteile werden in dem dargestellten Beispielsfall manuell von der an dem Palettenwechsler 12 angeordneten Palette 13 abgenommen. Mittels der Handlingvorrichtung 3 wird das Restgitter 10 von den Fertigteilen getrennt und anschließend von der Palette 13 abgeführt.

Die Handlingvorrichtung 3 weist einen horizontal schwenkbaren Ausleger 15 auf, an dem eine Handlingeinheit 16 aufgehängt ist. Die Handlingeinheit 16 besitzt einen im Wesentlichen rechteckigen Tragrahmen 17, der gegenüber dem Ausleger 15 um eine vertikale Achse schwenkbeweglich ist und der außerdem in vertikaler Richtung angehoben und abgesenkt werden kann.

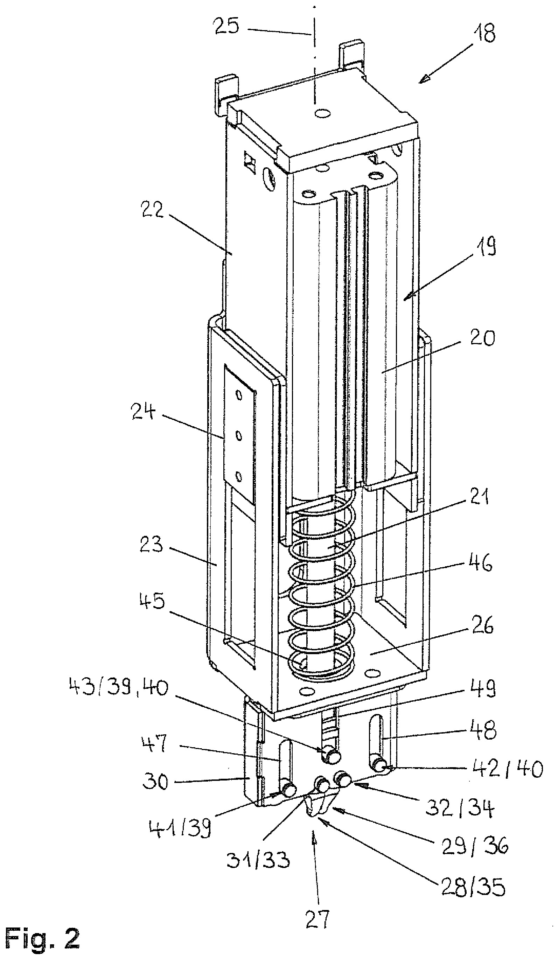

An der Unterseite des Tragrahmens 17 der Handlingeinheit 3 ist eine Mehrzahl baugleicher Greiferanordnungen 18 angebracht, die in Figur 1 durch den Tragrahmen 17 verdeckt sind. Die Greiferanordnungen 18 dienen als Vorrichtungen zum Handhaben des Restgitters 10. Eine der Greiferanordnungen 18 ist in Figur 2 im Detail gezeigt.

Gemäß Figur 2 weist eine jede der Greiferanordnungen 18 als Antriebsmotor eines Halteorganantriebes eine Kolben-Zylinder-Einheit 19 auf, die als Motorteile einen Zylinder 20 sowie einen im Zylinderinneren geführten und in Figur 2 unsichtbaren Kolben umfasst. An dem Kolben der Kolben-Zylinder-Einheit 19 ist eine aus dem Zylinder 20 nach unten austretende Kolbenstange 21 angebracht.

Ein Motorgehäuse 22 der Greiferanordnung 18 nimmt den Zylinder 20 der Kolben-Zylinder-Einheit 19 auf und ist mit dem Tragrahmen 17 der Handlingvorrichtung 3 starr verschraubt. Auf dem Motorgehäuse 22 sitzt ein Hubführungsgehäuse 23 auf. Das Hubführungsgehäuse 23 ist an dem Motorgehäuse 22 mittels einer Gleitführung 24 längs einer vertikalen Hubachse 25 bewegbar geführt.

An der Unterseite eines Bodens 26 des Hubführungsgehäuses 23 ist eine Greifereinheit 27 montiert. Diese umfasst als Halteorgane fungierende Winkelgreifer 28, 29, die längs der Hubachse 25 aus einem nach unten offenen und an seiner Oberseite mit dem Boden 26 des Hubführungsgehäuses verschraubten Greifergehäuse 30 der Greifereinheit 27 herausragen.

An dem Greifergehäuse 30 sind der Winkelgreifer 28 mittels einer als Schwenklager 31 ausgebildeten Halteorganlagerung und der Winkelgreifer 29 mittels einer als Schwenklager 32 ausgeführten Halteorganlagerung um eine horizontale Achse schwenkbar gelagert. Definiert werden die horizontalen Schwenkachsen der Winkelgreifer 28, 29 durch Lagerzapfen 33, 34, die zugehörige Lageraugen an dem Greifergehäuse 30 durchsetzen und deren eine Enden in Figur 2 sichtbar sind. Gemeinsam mit den Lageraugen an dem Greifergehäuse 30 bilden die Lagerzapfen 33, 34 die Schwenklager 31, 32 der Winkelgreifer 28, 29.

Ausweislich der Figuren 3 bis 8 werden der Winkelgreifer 28 von einem ersten Hebelarm eines zweiarmigen Schwenkhebels 35 und der Winkelgreifer 29 von einem ersten Hebelarm eines zweiarmigen Schwenkhebels 36 gebildet. Der zweiarmige Schwenkhebel 35 weist zusätzlich zu dem Winkelgreifer 28 einen gegenüber diesem abgewinkelten zweiten Hebelarm 37 aus. Entsprechend besitzt der zweiarmige Schwenkhebel 36 einen gegenüber dem Winkelgreifer 29 abgewinkelten zweiten Hebelarm 38.

Über den zweiten Hebelarm 37 wird der Winkelgreifer 28 von einer Querführungseinrichtung 39 beaufschlagt. Eine Querführungseinrichtung 40 beaufschlagt den Winkelgreifer 29 über den zweiten Hebelarm 38.

Die Querführungseinrichtung 39 umfasst eine Führungsrolle 41, die Querführungseinrichtung 40 eine Führungsrolle 42. Den Querführungseinrichtungen 39, 40 gemeinsam ist eine Führungsrolle 43. Sämtliche Führungsrollen 41, 42, 43 sind an einem gemeinsamen Führungsschieber 44 der Querführungseinrichtungen 39, 40 jeweils um eine horizontale Rollenachse drehbar gelagert.

Der im Inneren des Greifergehäuses 30 untergebrachte gemeinsame Führungsschieber 44 ist an die Kolbenstange 21 der Kolben-Zylinder-Einheit 19 angebunden, die zu diesem Zweck den Boden 26 des Hubführungsgehäuses 23 an einem Durchtritt 45 (Figur 2) durchsetzt. Oberhalb des Bodens 26 des Hubführungsgehäuses 23 sitzt auf der Kolbenstange 21 eine Druckfeder 46 auf, die zwischen dem Boden 26 des Hubführungsgehäuses 23 und der Unterseite des Motorgehäuses 22 vorgespannt ist.

Die an dem gemeinsamen Führungsschieber 44 der Querführungseinrichtungen 39, 40 gelagerten Führungsrollen 41, 42, 43 sind an dem Greifergehäuse 30 in Führungsschlitzen 47, 48, 49 geführt, die sich mit einem Übermaß gegenüber den Führungsrollen 41, 42, 43 längs der Hubachse 25 erstrecken. Nachdem an dem Greifergehäuse 30 auch die Schwenklager 31, 32 der Winkelgreifer 28, 29 vorgesehen sind, bildet das Greifergehäuse 30 eine gemeinsame Tragstruktur für die Schwenklager 31, 32 beziehungsweise die Winkelgreifer 28, 29 und die Querführungseinrichtungen 39, 40.

Ist die Bearbeitung eines Bleches an der Laser-Schneidmaschine 2 abgeschlossen und sind die dabei erstellten Fertigteile und das Restgitter 10 mit der Palette 13 zu dem Palettenwechsler 12 transferiert, so wird die Handlingeinheit 16 der Handlingvorrichtung 3 durch Schwenken des Auslegers 15 über die an dem Palettenwechsler 12 befindliche Palette 13 bewegt. Dabei wird der Tragrahmen 17 der Handlingeinheit 16 derart positioniert, dass die an dem Tragrahmen 17 montierten Greiferanordnungen 18 jeweils oberhalb einer der Restgitteröffnungen 11 an dem auf der Palette 13 lagernden Restgitter 10 zu liegen kommen. Es ergeben sich damit die in Figur 3 für eine der Greiferanordnungen 18 dargestellten Verhältnisse. Der Betriebszustand der Greiferanordnung 18 in Figur 3 entspricht dem Betriebszustand der Greiferanordnung 18 gemäß Figur 2.

Durch entsprechende Betätigung der Kolben-Zylinder-Einheit 19 hat sich im Inneren des Greifergehäuses 30 der an die Kolbenstange 21 angebundene gemeinsame Führungsschieber 44 der Querführungseinrichtungen 39, 40 einschließlich der Führungsrollen 41, 42, 43 längs der Hubachse 25 in die untere Endstellung bewegt. Die Querführungseinrichtungen 39, 40 nehmen damit längs der Hubachse 25 eine Außerfunktionshublage ein. Der Außerfunktionshublage der Querführungseinrichtungen 39, 40 ist eine Außerfunktions-Schwenkstellung der Winkelgreifer 28, 29 zugeordnet. Die an dem gemeinsamen Führungsschieber 44 angebrachte gemeinsame Führungsrolle 43 der Querführungseinrichtungen 39, 40 beaufschlagt sowohl den zweiten Hebelarm 37 des zweiarmigen Schwenkhebels 35 als auch den zweiten Hebelarm 38 des zweiarmigen Schwenkhebels 36 mit einer längs der Hubachse 25 nach unten gerichteten Kraft. Die Winkelgreifer 28, 29 an den zweiarmigen Schwenkhebeln 35, 36 sind in der Außerfunktions-Schwenkstellung gegeneinander bewegt und weisen folglich quer zu der Hubachse 25 ein Maß auf, das kleiner ist als die Weite der zugeordneten Restgitteröffnung 11 an dem Restgitter 10. Aufgrund der Beaufschlagung der zweiten Hebelarme 37, 38 der zweiarmigen Schwenkhebel 35, 36 durch die gemeinsame Führungsrolle 43 der Querführungseinrichtungen 39, 40 werden die Winkelgreifer 28, 29 sicher in der jeweils eingenommenen Außerfunktions-Schwenkstellung gehalten.

Die vorgespannte Druckfeder 46 auf der Kolbenstange 21 beaufschlagt das Hubführungsgehäuse 23 und das an diesem angebrachte Greifergehäuse 30 in die untere Endstellung gegenüber dem Motorgehäuse 22. Im Bereich der Gleitführung 24 stützt sich das Hubführungsgehäuse 23 mit einem Anschlag an einem an dem Motorgehäuse 22 vorgesehenen Widerlager nach unten hin ab (Figur 2).

Mit diesem Betriebszustand werden die Greiferanordnungen 18 durch Absenken des Tragrahmens 17 der Handlingvorrichtung 3 so weit in Richtung auf das von der Palette 13 gelagerte Restgitter 10 bewegt, bis das Greifergehäuse 30 mit seiner Unterseite auf dem Restgitter 10 aufsetzt oder von der Oberseite des Restgitters 10 nur noch geringfügig beabstandet ist. Die Greiferanordnung 18 befindet sich nun in einer Aufnahmebereitschaftsstellung. Die Winkelgreifer 28, 29 sind in die ihnen zugeordnete Restgitteröffnung 11 eingelaufen. Die Querführungseinrichtungen 39, 40 im Inneren des Greifergehäuses 30 befinden sich nach wie vor in der Außerfunktionshublage. Die Winkelgreifer 28, 29 im Inneren der zugeordneten Restgitteröffnung 11 nehmen dementsprechend weiterhin ihre Außerfunktions-Schwenkstellung ein (Figur 4).

Zur Bewegung der Winkelgreifer 28, 29 aus der Außerfunktions-Schwenkstellung in die Funktions-Schwenkstellung wird durch Betätigen der Kolben-Zylinder-Einheit 19 die Kolbenstange 21 gemeinschaftlich mit den daran angebrachten Querführungseinrichtungen 39, 40 längs der Hubachse 25 nach oben bewegt. Die Schwenklager 31, 32 der Winkelgreifer 28, 29 verändern dabei ihre Lage zunächst nicht. Aufgrund der über das Hubführungsgehäuse 23 und das Greifergehäuse 30 auf die Schwenklager 31, 32 in Gegenrichtung der Bewegungsrichtung der Querführungseinrichtungen 39, 40 wirkenden Beaufschlagung durch die Druckfeder 46 und unter der Wirkung des Eigengewichts der aus Hubführungsgehäuse 23 und Greifereinheit 27 bestehenden Baueinheit verbleiben die Schwenklager 31, 32 vielmehr in ihrer unteren Endstellung gegenüber dem Motorgehäuse 22 und somit auch gegenüber dem Tragrahmen 17 der Handlingvorrichtung 3.

Infolgedessen kommt es längs der Hubachse 25 zu einer linearen Bewegung der an die Kolbenstange 21 der Kolben-Zylinder-Einheit 19 angebundenen Querführungseinrichtungen 39, 40 relativ zu den Winkelgreifern 28, 29. Diese Relativbewegung wird über die von den Führungsrollen 41, 42 der Querführungseinrichtungen 39, 40 beaufschlagten zweiten Hebelarme 37, 38 der zweiarmigen Schwenkhebel 35, 36 in eine Schwenkbewegung der Winkelgreifer 28, 29 umgesetzt. Die Führungsrollen 41, 42 der Querführungseinrichtungen 39, 40 rollen dabei auf den zweiten Hebelarmen 37, 38 der zweiarmigen Schwenkhebel 35, 36 ab.

Aufgrund der Beaufschlagung der zweiten Hebelarme 37, 38 der zweiarmigen Schwenkhebel 35, 36 durch die sich längs der Hubachse 25 nach oben verlagernden Führungsrollen 41, 42 der Querführungseinrichtungen 39, 40 schwenken die Winkelgreifer 28, 29 mit gegenläufigen Querbewegungen in Querrichtung der Hubachse 25 aus der Außerfunktions-Schwenkstellung gemäß den Figuren 2 bis 4 in die Funktions-Schwenkstellung gemäß Figur 5. In der Funktions-Schwenkstellung hintergreifen die Winkelgreifer 28, 29 den Rand der zugeordneten Restgitteröffnung 11 an einander gegenüberliegenden Seiten. Die Querführungseinrichtungen 39, 40 nehmen im Inneren des Greifergehäuses 30 ihre der Funktions-Schwenkstellung der Winkelgreifer 28, 29 zugeordnete Funktionshublage ein.

Mit der Herstellung des Hintergriffs der Winkelgreifer 28, 29 an dem Rand der zugeordneten Restgitteröffnung 11 und mit Erreichen der Funktionshublage durch die Querführungseinrichtungen 39, 40 laufen letztere mit dem gemeinsamen Führungsschieber 44 auf die Unterseite des Bodens 26 des Hubführungsgehäuses 23 auf.

Bis zu diesem Zeitpunkt hat die mittels der Druckfeder 46 realisierte Beaufschlagung des Greifergehäuses 30 in Gegenrichtung der von den Querführungseinrichtungen 39, 40 längs der Hubachse 25 ausgeführten Aufwärtsbewegung bewirkt, dass das Greifergehäuse 30 und die daran gelagerten Winkelgreifer 28, 29 ihre längs der Hubachse 25 gegenüber dem Motorgehäuse 22 und dem Tragrahmen 17 der Handlingvorrichtung 3 eingenommene Lage ungeachtet der Aufwärtsbewegung der Querführungseinrichtungen 39, 40 beibehalten

Dies ändert sich, sobald die Querführungseinrichtungen 39, 40 im Laufe ihrer Aufwärtsbewegung mit dem gemeinsamen Führungsschieber 44 auf den Boden 26 des Hubführungsgehäuses 23 auflaufen. Von nun an führt eine mittels der Kolben-Zylinder-Einheit 19 erzeugte Aufwärtsbewegung dazu, dass die gegenüber den Winkelgreifern 28, 29 beziehungsweise deren Schwenklagern 31, 32 in die Funktionshublage bewegten Querführungseinrichtungen 39, 40 gemeinschaftlich mit den in der Funktions-Schwenkstellung befindlichen Winkelgreifern 28, 29 relativ zu dem Motorgehäuse 22 und dem Tragrahmen 17 der Handlingvorrichtung 3 eine längs der Hubachse 25 aufwärts gerichtete Hubbewegung ausführen. Aufgrund dieser Hubbewegung wird das von den Winkelgreifern 28, 29 hintergriffene Restgitter 10 von der Palette 13 abgehoben und dadurch von den auf der Palette 13 verbleibenden und der Einfachheit halber nicht dargestellten Fertigteilen der Blechbearbeitung getrennt. Die Druckfeder 46 wird zwischen dem Hubführungsgehäuse 23 und dem Motorgehäuse 22 gestaucht (Figur 6).

Das Restgitter 10 lagert nun auf den in die Funktions-Schwenkstellung bewegten Winkelgreifern 28, 29 der verschiedenen Greiferanordnungen 18 der Handlingvorrichtung 3.

Die in die Funktions-Schwenkstellung bewegten und durch das Restgitter 10 in Schwerkraftrichtung belasteten Winkelgreifer 28, 29 sind dabei gegen eine unerwünschte Rückstellung in die Außerfunktions-Schwenkstellung gesichert. Bewirkt wird die Rückstellsicherung durch die in die Funktionshublage bewegten Querführungseinrichtungen 39, 40 der Winkelgreifer 28, 29.

Wie in Figur 6 zu erkennen ist, sind die Querführungseinrichtungen 39, 40 und die zweiarmigen Schwenkhebel 35, 36 konstruktiv derart aufeinander abgestimmt, dass die Führungsrollen 41, 42 der in die Funktionshublage bewegten Querführungseinrichtungen 39, 40 den freien Enden der zweiten Hebelarme 37, 38 der zweiarmigen Schwenkhebel 35, 36 senkrecht zu der Hubachse 25 gegenüberliegen, wenn die Winkelgreifer 28, 29 die Funktions-Schwenkstellung einnehmen. Aufgrund einer in Schwerkraftrichtung wirkenden Belastung der Winkelgreifer 28, 29 durch das Restgitter 10 stützen sich die zweiten Hebelarme 37, 38 der zweiarmigen Schwenkhebel 35, 36 an den Führungsrollen 41, 42 der Querführungseinrichtungen 39, 40 mit einer Wirkungslinie ab, die senkrecht zu der Hubachse 25 verläuft.

In dem Betriebszustand gemäß Figur 6 werden die Greiferanordnungen 18 mit dem daran gehaltenen und von der Palette 13 abgehobenen Restgitter 10 durch eine entsprechende Schwenkbewegung des Auslegers 15 der Handlingvorrichtung 3 von der Palette 1 wegbewegt. Die Schwenkbewegung des Auslegers 15 mit dem Restgitter 10 endet, sobald das Restgitter 10 oberhalb einer in den Figuren 7 und 8 angedeuteten Restgitterpalette 50 zu liegen kommt. Die Greiferanordnungen 18 befinden sich damit in einer Abgabebereitschaftsstellung.

Nun wird die Kolben-Zylinder-Einheit 19 der einzelnen Greiferanordnungen 18 drucklos geschaltet und unter der Wirkung des Gewichts des Restgitters 10 und mit Unterstützung durch die sich entspannende Druckfeder 46 bewegt sich das Greifergehäuse 30 mit den gegenüber den Schwenklagern 31, 32 nach wie vor in der Funktionshublage befindlichen Querführungseinrichtungen 39, 40 und den weiterhin in die Funktions-Schwenkstellung bewegten Winkelgreifern 28, 29 längs der Hubachse 25 nach unten.

Aufgrund des horizontalen Verlaufs der Wirkungslinie der gegenseitigen Abstützung der zweiten Hebelarme 37, 38 der zweiarmigen Schwenkhebel 35, 36 einerseits und der Führungsrollen 41, 42 der Querführungseinrichtungen 39, 40 andererseits sind die zweiarmigen Schwenkhebel 35, 36 aufgrund der auf die Winkelgreifer 28, 29 in Schwerkraftrichtung wirkenden Belastung nicht bestrebt, die Querführungseinrichtungen 39, 40 aus der Funktionshublage abwärts in die Außerfunktionshublage zu bewegen. Nur durch eine derartige Abwärtsbewegung der Querführungseinrichtungen 39, 40 würden aber die zweiarmigen Schwenkhebel 35, 36 für eine Schwenkbewegung freigegeben, bei der sich die Winkelgreifer 28, 29 aus der Funktions-Schwenkstellung in die Außerfunktions-Schwenkstellung bewegen könnten.

Bei der Abwärtsbewegung des Greifergehäuses 30 bleibt die gegen eine Rückstellung der Winkelgreifer 28, 29 in die Außerfunktions-Schwenkstellung selbsthemmende gegenseitige Abstützung der Führungsrollen 41, 42 der Querführungseinrichtungen 39, 40 einerseits und der zweiten Hebelarme 37, 38 der zweiarmigen Schwenkhebel 35, 36 andererseits erhalten. Folglich senkt sich das Greifergehäuse 30 mit dem daran gehaltenen Restgitter 10 so weit ab, bis an der Gleitführung 24 der Anschlag an dem Hubführungsgehäuse 23 auf das Widerlager an dem Motorgehäuse 22 aufläuft. Dadurch kommt das Restgitter 10 mit geringem Abstand von der Oberseite der Restgitterpalette 50 zu liegen (Figur 7).

Nach wie vor werden die in die Funktions-Schwenkstellung bewegten Winkelgreifer 28, 29 durch die in die Funktionshublage bewegten Querführungseinrichtungen 39, 40 gegen eine selbsttätige Rückstellbewegung unter der Wirkung des Gewichtes des Restgitters 10 blockiert. Das Restgitter 10 ist folglich auch weiterhin an den Greiferanordnungen 18 der Handlingvorrichtung 3 sicher festgelegt.

Denkbar ist auch eine Betätigung der Kolben-Zylinder-Einheit 19, um das Greifergehäuse 30 aus der Position gemäß Figur 6 in die Position gemäß Figur 7 abzusenken. Dabei darf es aber im Inneren des Greifergehäuses 30 nicht zu einer Relativbewegung der an die Kolbenstange 21 angebundenen Querführungseinrichtungen 39, 40 gegenüber den zweiarmigen Schwenkhebeln 35, 36 kommen. Eine derartige Relativbewegung würde die Aufrechterhaltung der Funktions-Schwenkstellung der Winkelgreifer 28, 29 zumindest gefährden.

Zum Lösen des Restgitters 10 von den Greiferanordnungen 18 wird die Kolben-Zylinder-Einheit 19 einer jeden Greiferanordnung 18 betätigt und die Kolbenstange 21 der Greiferanordnungen 18 längs der Hubachse 25 abwärts bewegt. Die Abwärtsbewegung der Kolbenstange 21 ist mit einer entsprechenden Bewegung der Querführungseinrichtungen 39, 40 relativ zu den Winkelgreifern 28, 29 beziehungsweise relativ zu den Schwenklagern 31, 32 der Winkelgreifer 28, 29 verbunden. Die nach einem kleinen Teil der Abwärtsbewegung der Querführungseinrichtungen 39, 40 auf den Führungsrollen 41, 42 der Querführungseinrichtungen 39, 40 aufliegenden zweiten Hebelarme 37, 38 der zweiarmigen Schwenkhebel 35, 36 werden von den Querführungseinrichtungen 39, 40, im Einzelnen von deren gemeinsamer Führungsrolle 43, beaufschlagt und mit gegenläufigen Querbewegungen quer zu der Hubachse 25 gespreizt. Damit verbunden sind gegenläufige Querbewegungen der Winkelgreifer 28, 29, aufgrund derer die Winkelgreifer 28, 29 aus der Funktions-Schwenkstellung in die Außerfunktions-Schwenkstellung gelangen. Der zuvor bestehende Hintergriff der Winkelgreifer 28, 29 an dem Rand der zugeordneten Restgitteröffnung 11 wird aufgehoben und das Restgitter 10 wird unter Schwerkraftwirkung auf der Restgitterpalette 50 abgelegt (Figur 8). Die Greiferanordnungen 18 der Handlingvorrichtung 3 befinden sich nun wieder in dem Betriebszustand gemäß den Figuren 2 und 3.

## Patentansprüche

1. Vorrichtung zum Handhaben von Werkstücken, insbesondere von Werkstücken in Form von Bearbeitungsprodukten (10) einer schneidenden Blechbearbeitung, mit einem mittels einer Halteorganlagerung (31, 32) an einer Tragstruktur (30) beweglich gelagerten Halteorgan (28, 29) und mit einem Halteorganantrieb, der einen Antriebsmotor (19) aufweist, mittels dessen das Halteorgan (28, 29) sowohl mit einer längs einer Hubachse (25) ausgeführten Hubbewegung als auch mit einer in Querrichtung der Hubachse (25) ausgeführten Querbewegung bewegbar ist.
• wobei das Halteorgan (28, 29) zur Ausführung der Querbewegung mittels einer Querführungseinrichtung (39, 40) geführt und aufgrund der geführten Querbewegung aus einer Außerfunktionsstellung in eine Funktionsstellung und/oder aus einer Funktionsstellung in eine Außerfunktionsstellung bewegbar ist,
• wobei von dem Halteorgan (28, 29) in der Funktionsstellung ein Rand eines Werkstückes hintergreifbar ist,
• wobei von dem Halteorgan (28, 29) in der Außerfunktionsstellung ein Rand eines Werkstückes nicht hintergreifbar ist,
• wobei bei in die Außerfunktionsstellung bewegtem Halteorgan (28, 29) die Querführungseinrichtung (39, 40) des Halteorgans (28, 29) mittels des Antriebsmotors (19) relativ zu dem Halteorgan (28, 29) längs der Hubachse (25) aus einer der Außerfunktionsstellung des Halteorgans (28, 29) zugeordneten Außerfunktionshublage in eine der Funktionsstellung des Halteorgans (28, 29) zugeordneten Funktionshublage bewegbar ist und/oder
• wobei bei in die Funktionsstellung bewegtem Halteorgan (28, 29) und bei in die Funktionshublage bewegter Querführungseinrichtung (39, 40) des Halteorgans (28, 29) die Querführungseinrichtung (39, 40) mittels des Antriebsmotors (19) relativ zu dem Halteorgan (28, 29) längs der Hubachse (25) aus der Funktionshublage in die Außerfunktionshublage bewegbar ist,
• wobei aufgrund der mittels des Antriebsmotors (19) bewirkten Bewegung der Querführungseinrichtung (39, 40) aus der Außerfunktionshublage in die Funktionshublage das Halteorgan (28, 29) bei ortsunveränderlicher Halteorganlagerung (31, 32) mit einer Querbewegung aus der Außerfunktionsstellung in die Funktionsstellung bewegbar ist und
• wobei aufgrund der mittels des Antriebsmotors (19) bewirkten Bewegung der Querführungseinrichtung (39, 40) aus der Funktionshublage in die Außerfunktionshublage das Halteorgan (28, 29) bei ortsunveränderlicher Halteorganlagerung (31, 32) mit einer Querbewegung aus der Funktionsstellung in die Außerfunktionsstellung bewegbar ist,
**dadurch gekennzeichnet, dass** mittels des Antriebsmotors (19) das in die Funktionsstellung bewegte Halteorgan (28, 29) gemeinschaftlich mit der Halteorganlagerung (31, 32) und der in die Funktionshublage bewegten Querführungseinrichtung (39, 40) mit einer längs der Hubachse (25) ausgeführten Hubbewegung bewegbar ist.

2. Vorrichtung nach Anspruch 1, **dadurch gekennzeichnet, dass** das in die Funktionsstellung bewegte Halteorgan (28, 29) durch die in die Funktionshublage bewegte Querführungseinrichtung (39, 40) des Halteorgans (28, 29) gegen eine durch eine Belastung des Halteorgans (28, 29) bewirkte Rückstellbewegung in die Außerfunktionsstellung blockiert ist.

3. Vorrichtung nach Anspruch 2, **dadurch gekennzeichnet, dass** das in die Funktionsstellung bewegte Halteorgan (28, 29) durch die in die Funktionshublage bewegte Querführungseinrichtung (39, 40) des Halteorgans (28, 29) aufgrund einer selbsthemmenden gegenseitigen Lagerung von Halteorgan (28, 29) und Querführungseinrichtung (39, 40) gegen eine durch eine Belastung des Halteorgans (28, 29) bewirkte Rückstellbewegung in die Außerfunktionsstellung blockiert ist.

4. Vorrichtung nach einem der vorhergehenden Ansprüche, **dadurch gekennzeichnet, dass** bei der von der Querführungseinrichtung (39, 40) des Halteorgans (28, 29) relativ zu dem Halteorgan (28, 29) längs der Hubachse (25) ausgeführten Bewegung aus der Außerfunktionshublage in die Funktionshublage das Halteorgan (28, 29) in Gegenrichtung der Bewegungsrichtung der Querführungseinrichtung (39, 40) kraftbeaufschlagt ist.

5. Vorrichtung nach einem der vorhergehenden Ansprüche, **dadurch gekennzeichnet, dass** die Halteorganlagerung (31, 32) und die Querführungseinrichtung (39, 40) des Halteorgans (28, 29) an einer gemeinsamen Tragstruktur (30) vorgesehen sind, wobei die Querführungseinrichtung (39, 40) an der gemeinsamen Tragstruktur (30) relativ zu dem in die Außerfunktionsstellung und/oder relativ zu dem in die Funktionsstellung bewegten Halteorgan (28, 29) längs der Hubachse (25) bewegbar geführt ist und dass zur gemeinschaftlichen Hubbewegung des in die Funktionsstellung bewegten Halteorgans (28, 29) und der in die Funktionshublage bewegten Querführungseinrichtung (39, 40) die gemeinsame Tragstruktur (30) mit der an der gemeinsamen Tragstruktur (30) vorgesehenen Halteorganlagerung (31, 32) und der an der gemeinsamen Tragstruktur (30) vorgesehenen Querführungseinrichtung (39, 40) mittels des Antriebsmotors (19) längs der Hubachse (25) bewegbar ist.

6. Vorrichtung nach Anspruch 5, **dadurch gekennzeichnet, dass** die Halteorganlagerung (31, 32) an der gemeinsamen Tragstruktur (30) in Richtung der Hubachse (25) relativ zu der gemeinsamen Tragstruktur (30) ortsunveränderlich ist und dass bei der von der Querführungseinrichtung (39, 40) des Halteorgans (28, 29) relativ zu dem Halteorgan (28, 29) längs der Hubachse (25) ausgeführten Bewegung aus der Außerfunktionshublage in die Funktionshublage das Halteorgan (28, 29) über die gemeinsame Tragstruktur (30) in Gegenrichtung der Bewegungsrichtung der Querführungseinrichtung (39, 40) kraftbeaufschlagt ist.

7. Vorrichtung nach einem der vorhergehenden Ansprüche, **dadurch gekennzeichnet, dass** als Antriebsmotor (19) des Halteorganantriebes eine Kolben-Zylinder-Einheit vorgesehen ist mit einem Kolben und einem Zylinder (20) als Motorteile, von denen der eine relativ zu dem anderen längs der Hubachse (25) bewegbar ist und dass die Querführungseinrichtung (39, 40) des Halteorgans (28, 29) an den relativ zu dem anderen Motorteil längs der Hubachse (25) bewegbaren Motorteil der Kolben-Zylinder-Einheit angebunden ist.

8. Vorrichtung nach einem der vorhergehenden Ansprüche, **dadurch gekennzeichnet, dass** die Querführungseinrichtung (39, 40) des Halteorgans (28, 29) zur Führung des Halteorgans (28, 29) bei dessen Querbewegung wenigstens eine Führungsrolle (41, 42, 43) aufweist.

9. Vorrichtung nach einem der vorhergehenden Ansprüche, **dadurch gekennzeichnet, dass** das Halteorgan (28, 29) von einem Hebelarm eines Schwenkhebels (35, 36) gebildet ist, der mittels einer als Schwenklager ausgeführten Halteorganlagerung (31, 32) an der Tragstruktur (30) beweglich gelagert ist und der durch die mittels des Antriebsmotors (19) relativ zu dem Schwenkhebel (35, 36) längs der Hubachse (25) bewegte Querführungseinrichtung (39, 40) aus einer Außerfunktionsstellung in Form einer Außerfunktions-Schwenkstellung in eine Funktionsstellung in Form einer Funktions-Schwenkstellung und/ oder aus einer Funktionsstellung in Form einer Funktions-Schwenkstellung in eine Außerfunktionsstellung in Form einer Außerfunktions-Schwenkstellung schwenkbar ist.

10. Vorrichtung nach Anspruch 9, **dadurch gekennzeichnet, dass** als Schwenkhebel (35, 36) ein zweiarmiger Schwenkhebel vorgesehen ist, wobei das Halteorgan (28, 29) von einem ersten Hebelarm des zweiarmigen Schwenkhebels gebildet ist und wobei die längs der Hubachse (25) relativ zu dem ersten Hebelarm bewegte Querführungseinrichtung (39, 40) einen zweiten Hebelarm (37, 38) des zweiarmigen Schwenkhebels beaufschlagt und dadurch der das Halteorgan (28, 29) bildende erste Hebelarm aus einer Außerfunktions-Schwenkstellung in eine Funktions-Schwenkstellung und/oder aus einer Funktions-Schwenkstellung in eine Außerfunktions-Schwenkstellung schwenkbar ist.

11. Vorrichtung nach einem der vorhergehenden Ansprüche, **dadurch gekennzeichnet, dass** zwei Halteorgane (28, 29) vorgesehen sind, von denen jedes mittels einer Halteorganlagerung (31, 32) an einer Tragstruktur (30) beweglich gelagert ist und die mittels des Antriebsmotors (19) des Halteorganantriebes sowohl mit einer längs der Hubachse (25) ausgeführten Hubbewegung als auch mit einer von den Halteorganen (28, 29) in Querrichtung der Hubachse (25) gegenläufig ausgeführten Querbewegung bewegbar sind,
• wobei jedes der Halteorgane (28, 29) zur Ausführung der Querbewegung mittels einer Querführungseinrichtung (39, 40) geführt und aufgrund der geführten Querbewegung aus einer Außerfunktionsstellung in eine Funktionsstellung und/oder aus einer Funktionsstellung in eine Außerfunktionsstellung bewegbar ist,
• wobei bei in die Außerfunktionsstellung bewegten Halteorganen (28, 29) die Querführungseinrichtungen (39, 40) der Halteorgane (28, 29) mittels des Antriebsmotors (19) relativ zu den Halteorganen (28, 29) längs der Hubachse (25) aus einer der Außerfunktionsstellung der Halteorgane (28, 29) zugeordneten Außerfunktionshublage in eine der Funktionsstellung der Halteorgane (28, 29) zugeordnete Funktionshublage bewegbar sind und/oder
• wobei bei in die Funktionsstellung bewegten Halteorganen (28, 29) und bei in die Funktionshublage bewegten Querführungseinrichtungen (39, 40) der Halteorgane (28, 29) die Querführungseinrichtungen (39, 40) mittels des Antriebsmotors (19) relativ zu den Halteorganen (28, 29) längs der Hubachse (25) aus der Funktionshublage in die Außerfunktionshublage bewegbar sind,
• wobei aufgrund der mittels des Antriebsmotors (19) bewirkten Bewegung der Querführungseinrichtungen (39, 40) aus der Außerfunktionshublage in die Funktionshublage die Halteorgane (28, 29) bei ortsunveränderlichen Halteorganlagerungen (31, 32) mit einer Querbewegung aus der Außerfunktionsstellung gegenläufig in die Funktionsstellung bewegbar sind,
• wobei aufgrund der mittels des Antriebsmotors (19) bewirkten Bewegung der Querführungseinrichtungen (39, 40) aus der Funktionshublage in die Außerfunktionshublage die Halteorgane (28, 29) bei ortsunveränderlichen Halteorganlagerungen (31, 32) mit einer Querbewegung aus der Funktionsstellung gegenläufig in die Außerfunktionsstellung bewegbar sind und
• wobei mittels des Antriebsmotors (19) die in die Funktionsstellung bewegten Halteorgane (28, 29) gemeinschaftlich mit den in die Funktionshublage bewegten Querführungseinrichtungen (39, 40) mit einer längs der Hubachse (25) ausgeführten Hubbewegung bewegbar sind.

12. Maschinelle Anordnung zum Zu- und/oder zum Abführen von Werkstücken an einer Werkzeugmaschine (2), insbesondere zum Zu- und/oder zum Abführen von Bearbeitungsprodukten (10) an einer Werkzeugmaschine (2) zur schneidenden Bearbeitung von Blechen, mit einem bewegbaren Tragrahmen (17), an welchem eine ein Halteorgan (28, 29) aufweisende Vorrichtung (18) zum Handhaben von Werkstücken vorgesehen ist, wobei die Vorrichtung (18) zum Handhaben von Werkstücken durch Bewegen des Tragrahmens (17) in eine Aufnahmebereitschaftsstellung bewegbar ist, bei welcher das in eine Außerfunktionsstellung bewegte Halteorgan (28, 29) zur Festlegung eines Werkstückes in eine Funktionsstellung bewegbar ist und/oder wobei die Vorrichtung (18) zum Handhaben von Werkstücken durch Bewegen des Tragrahmens (17) in eine Abgabebereitschaftsstellung bewegbar ist, bei welcher das in eine Funktionsstellung bewegte Halteorgan (28, 29) zur Freigabe eines Werkstückes in eine Außerfunktionsstellung bewegbar ist, **dadurch gekennzeichnet, dass** als Vorrichtung (18) zum Handhaben von Werkstücken eine Vorrichtung nach einem der Ansprüche 1 bis 11 vorgesehen ist.

13. Maschinelle Anordnung zum Bearbeiten von Werkstücken, insbesondere zum schneidenden Bearbeiten von Blechen, mit einer Werkzeugmaschine (2) für die Werkstückbearbeitung, gegebenenfalls für die schneidende Blechbearbeitung, sowie mit einer maschinellen Anordnung (3) zum Zu- und/oder zum Abführen von Werkstücken, mittels derer der Werkzeugmaschine (2) Werkstücke zuführbar und/oder mittels derer Werkstücke von der Werkzeugmaschine (2) abführbar sind, **dadurch gekennzeichnet, dass** als maschinelle Anordnung (3) zum Zu- und/oder zum Abführen von Werkstücken eine maschinelle Anordnung nach Anspruch 12 vorgesehen ist.

## Claims

1. Device for handling workpieces, in particular workpieces in the form of processing products (10) of a cutting metal sheet processing operation, having a retention member (28, 29) which is movably supported on a carrier structure (30) by means of a retention member bearing (31, 32) and having a retention member drive which has a drive motor (19), by means of which the retention member (28, 29) can be moved both with a lifting movement carried out along a lifting axis (25) and with a transverse movement which is carried out in the transverse direction of the lifting axis (25),
• wherein the retention member (28, 29) is guided by means of a transverse guide device (39, 40) in order to carry out the transverse movement and being able to move on the basis of the guided transverse movement from a non-operative position into an operative position and/or out of an operative position into a non-operative position,
• wherein an edge of a workpiece is able to be engaged behind by the retention member (28, 29) in the operative position and
• wherein an edge of a workpiece is not able to be engaged behind by the retention member (28, 29) in the non-operative position,
• wherein, when the retention member (28, 29) is moved into the non-operative position, the transverse guide device (39, 40) of the retention member (28, 29) can be moved by means of the drive motor (19) relative to the retention member (28, 29) along the lifting axis (25) out of a non-operative lifting position associated with the non-operative position of the retention member (28, 29) into an operative lifting position associated with the operative position of the retention member (28, 29) and/or
• wherein, when the retention member (28, 29) is moved into the operative position and when the transverse guide device (39, 40) of the retention member (28, 29) is moved into the operative lifting position, the transverse guide device (39, 40) can be moved by means of the drive motor (19) relative to the retention member (28, 29) along the lifting axis (25) out of the operative lifting position into the non-operative lifting position,
• wherein the retention member (28, 29) can be moved with a transverse movement out of the non-operative position into the operative position with non-positionally-variable retention member bearing (31, 32) as a result of the movement of the transverse guide device (39, 40) out of the non-operative lifting position into the operative lifting position, which movement is brought about by means of the drive motor (19), and
• wherein the retention member (28, 29) can be moved with a transverse movement out of the operative position into the non-operative position with non-positionally-variable retention member bearing (31, 32) as a result of the movement of the transverse guide device (39, 40) out of the operative lifting position into the non-operative lifting position, which movement is brought about by means of the drive motor (19),
**characterised in that** the retention member (28, 29) which is moved into the operative position can be moved with a lifting movement carried out along the lifting axis (25) by means of the drive motor (19) together with the retention member bearing (31, 32) and the transverse guide device (39, 40) which is moved into the operative lifting position.

2. Device according to claim 1, **characterised in that** the retention member (28, 29) which is moved into the operative position is blocked by the transverse guide device (39, 40) of the retention member (28, 29) against a return movement into the non-operative position brought about by the retention member (28, 29) being loaded, which transverse guide device is moved into the operative lifting position.

3. Device according to claim 2, **characterised in that** the retention member (28, 29) moved into the operative position is blocked by the transverse guide device (39, 40) of the retention member (28, 29), which transverse guide device is moved into the operative lifting position, as a result of a self-locking mutual support of the retention member (28, 29) and the transverse guide device (39, 40) counter to a return movement into the non-operative position brought about by the retention member (28, 29) being loaded.

4. Device according to any one of the preceding claims, **characterised in that** the retention member (28, 29) is acted on with force in a direction counter to the movement direction of the transverse guide device (39, 40) during the movement carried out by the transverse guide device (39, 40) of the retention member (28, 29) relative to the retention member (28, 29) along the lifting axis (25) out of the non-operative lifting position into the operative lifting position.

5. Device according to any one of the preceding claims, **characterised in that** the retention member bearing (31, 32) and the transverse guide device (39, 40) of the retention member (28, 29) are provided on a common carrier structure (30), the transverse guide device (39, 40) being guided on the common carrier structure (30) in a movable manner along the lifting axis (25) relative to the retention member (28, 29) which is moved into the non-operative position and/or relative to the retention member (28, 29) which is moved into the operative position, and **in that** the common carrier structure (30) can be moved by means of the drive motor (19) along the lifting axis (25) with the retention member bearing (31, 32) provided on the common carrier structure (30) and the transverse guide device (39, 40) provided on the common carrier structure (30) for the common lifting movement of the retention member (28, 29) moved into the operative position and the transverse guide device (39, 40) moved into the operative lifting position.

6. Device according to claim 5, **characterised in that** the retention member bearing (31, 32) on the common carrier structure (30) is non-positionally-variable in the direction of the lifting axis (25) relative to the common carrier structure (30) and **in that** the retention member (28, 29) is acted on with force via the common carrier structure (30) in the direction counter to the movement direction of the transverse guide device (39, 40) during the movement out of the non-operative lifting position into the operative lifting position, which movement is carried out by the transverse guide device (39, 40) of the retention member (28, 29) relative to the retention member (28, 29) along the lifting axis (25).

7. Device according to any one of the preceding claims, **characterised in that** a piston/cylinder unit is provided as the drive motor (19) of the retention member drive having a piston and a cylinder (20) as motor components, of which one can be moved relative to the other along the lifting axis (25), and **in that** the transverse guide device (39, 40) of the retention member (28, 29) is connected to the motor component of the piston/cylinder unit, which motor component is movable relative to the other motor component along the lifting axis (25).

8. Device according to any one of the preceding claims, **characterised in that** the transverse guide device (39, 40) of the retention member (28, 29) has at least one guide roller (41, 42, 43) in order to guide the retention member (28, 29) during the transverse movement thereof.

9. Device according to any one of the preceding claims, **characterised in that** the retention member (28, 29) is formed by a lever arm of a pivot lever (35, 36) which is movably supported on the carrier structure (30) by means of a retention member bearing (31, 32) in the form of a pivot bearing and which can be pivoted out of a non-operative position in the form of a non-operative pivot position into an operative position in the form of an operative pivot position and/or out of an operative position in the form of an operative pivot position into a non-operative position in the form of a non-operative pivot position by means of the transverse guide device (39, 40) which is moved by means of the drive motor (19) along the lifting axis (25) relative to the pivot lever (35, 36).

10. Device according to claim 9, **characterised in that** a two-armed pivot lever is provided as the pivot lever (35, 36), the retention member (28, 29) being formed by a first lever arm of the two-armed pivot lever and the transverse guide device (39, 40) which is moved along the lifting axis (25) relative to the first lever arm acting on a second lever arm (37, 38) of the two-armed pivot lever and thereby the first lever arm which forms the retention member (28, 29) being able to be pivoted out of a non-operative pivot position into an operative pivot position and/or out of an operative pivot position into a non-operative pivot position.

11. Device according to any one of the preceding claims, **characterised in that** there are provided two retention members (28, 29), each of which is movably supported on a carrier structure (30) by means of a retention member bearing (31, 32) and which can be moved by means of the drive motor (19) of the retention member drive both with a lifting movement which is carried out along the lifting axis (25) and with a transverse movement which is carried out by the retention members (28, 29) in an opposing manner in the transverse direction of the lifting axis (25),
• each of the retention members (28, 29) being guided by means of a transverse guide device (39, 40) in order to carry out the transverse movement and being able to be moved as a result of the guided transverse movement out of a non-operative position into an operative position and/or out of an operative position into a non-operative position,
• when the retention members (28, 29) are moved into the non-operative position, the transverse guide devices (39, 40) of the retention members (28, 29) being able to be moved by means of the drive motor (19) relative to the retention members (28, 29) along the lifting axis (25) out of a non-operative lifting position associated with the non-operative position of the retention members (28, 29) into an operative lifting position associated with the operative position of the retention members (28, 29) and/or,
• when the retention members (28, 29) are moved into the operative position and when the transverse guide devices (39, 40) of the retention members (28, 29) are moved into the operative lifting position, the transverse guide devices (39, 40) being able to be moved by means of the drive motor (19) relative to the retention members (28, 29) along the lifting axis (25) out of the operative lifting position into the non-operative lifting position,
• wherein the retention members (28, 29) can be moved in an opposing manner with a transverse movement out of the non-operative position into the operative position with non-positionally-variable retention member bearings (31, 32) as a result of the movement of the transverse guide devices (39, 40) out of the non-operative lifting position into the operative lifting position, which movement is brought about by means of the drive motor (19),
• wherein the retention members (28, 29) can be moved in an opposing manner with a transverse movement out of the operative position into the non-operative position with non-positionally-variable retention member bearings (31, 32) as a result of the movement of the transverse guide devices (39, 40) out of the operative lifting position into the non-operative lifting position, which movement is brought about by means of the drive motor (19), and
• wherein the retention members (28, 29) which are moved into the operative position can be moved by means of the drive motor (19) together with the transverse guide devices (39, 40) which are moved into the operative lifting position with a lifting movement carried out along the lifting axis (25).

12. Mechanical arrangement for supplying and/or discharging workpieces on a machine tool (2), in particular for supplying and/or discharging processing products (10) on a machine tool (2) for the cutting processing of metal sheets, having a movable carrier frame (17), on which a device (18) which has a retention member (28, 29) is provided for handling workpieces, the device (18) for handling workpieces being movable by the carrier frame (17) being moved into a ready-to-receive position, in which the retention member (28, 29) which is moved into a non-operative position can be moved into an operative position in order to fix a workpiece and/or the device (18) for handling workpieces being movable into a ready-for-discharge position by the carrier frame (17) being moved, in which the retention member (28, 29) which is moved into an operative position can be moved into a non-operative position in order to release a workpiece, **characterised in that** a device according to any one of claims 1 to 11 is provided as the device (18) for handling workpieces.

13. Mechanical arrangement for processing workpieces, in particular for the cutting processing of metal sheets, having a machine tool (2) for the workpiece processing, optionally for the cutting metal sheet processing, and having a mechanical arrangement (3) for supplying and/or discharging workpieces, by means of which workpieces can be supplied to the machine tool (2) and/or by means of which workpieces can be discharged from the machine tool (2), **characterised in that** a mechanical arrangement according to claim 12 is provided as the mechanical arrangement (3) for supplying and/or discharging workpieces.

## Revendications

1. Dispositif de manipulation de pièces d'oeuvre, en particulier de pièces sous la forme de produits d'usinage (10) d'un usinage de découpe de tôles, avec un organe de maintien (28, 29) monté à déplacement sur une structure porteuse (30) au moyen d'un palier (31, 32) d'organe de maintien, et avec un entraînement d'organe de maintien, qui présente un moteur d'entraînement (19) au moyen duquel l'organe de maintien (28, 29) peut être déplacé aussi bien avec un mouvement de levage effectué le long d'un axe de levage (25) qu'avec un mouvement transversal effectué en direction transversale à l'axe de levage (25),
- sachant que l'organe de maintien (28, 29) est guidé au moyen d'un équipement (39, 40) de guidage transversal pour effectuer le mouvement transversal et, en vertu du mouvement transversal guidé, peut être déplacé d'une position de non-fonctionnement dans une position de fonctionnement et/ou d'une position de fonctionnement dans une position de non-fonctionnement,
- sachant que l'organe de maintien (28, 29), dans la position de fonctionnement, peut engager par l'arrière un bord d'une pièce d'oeuvre,
- sachant que l'organe de maintien (28, 29), dans la position de non-fonctionnement, ne peut pas engager par l'arrière un bord d'une pièce,
- sachant que, l'organe de maintien (28, 29) étant déplacé dans la position de non-fonctionnement, l'équipement (39, 40) de guidage transversal de l'organe de maintien (28, 29) peut, au moyen du moteur d'entraînement (19), être déplacé par rapport à l'organe de maintien (28, 29) le long de l'axe de levage (25) d'une position de levage de non-fonctionnement associée à la position de non-fonctionnement de l'organe de maintien (28, 29) dans une position de levage de fonctionnement associée à la position de fonctionnement de l'organe de maintien (28, 29),
- et/ou sachant que, l'organe de maintien (28, 29) étant déplacé dans la position de fonctionnement et l'équipement (39, 40) de guidage transversal de l'organe de maintien (28, 29) étant déplacé dans la position de levage de fonctionnement, l'équipement (39, 40) de guidage transversal peut, au moyen du moteur d'entraînement (19), être déplacé par rapport à l'organe de maintien (28, 29) le long de l'axe de levage (25) de la position de levage de fonctionnement dans la position de levage de non-fonctionnement,
- sachant qu'en vertu du mouvement, produit au moyen du moteur d'entraînement (19), de l'équipement (39, 40) de guidage transversal de la position de levage de non-fonctionnement dans la position de levage de fonctionnement, l'organe de maintien (28, 29) peut, le palier (31, 32) d'organe de maintien étant stationnaire, être déplacé avec un mouvement transversal de la position de non-fonctionnement dans la position de fonctionnement,
- et sachant qu'en vertu du mouvement, produit au moyen du moteur d'entraînement (19), de l'équipement (39, 40) de guidage transversal de la position de levage de fonctionnement dans la position de levage de non-fonctionnement, l'organe de maintien (28, 29) peut, le palier (31, 32) d'organe de maintien étant stationnaire, être déplacé avec un mouvement transversal de la position de fonctionnement dans la position de non-fonctionnement,
**caractérisé en ce que**, au moyen du moteur d'entraînement (19), l'organe de maintien (28, 29) déplacé dans la position de fonctionnement peut, conjointement avec le palier (31, 32) d'organe de maintien et l'équipement (39, 40) de guidage transversal déplacé dans la position de levage de fonctionnement, être déplacé avec un mouvement de levage effectué le long de l'axe de levage (25).

2. Dispositif selon la revendication 1, **caractérisé en ce que** l'organe de maintien (28, 29) déplacé dans la position de fonctionnement est, par l'équipement (39, 40) de guidage transversal de l'organe de maintien (28, 29) déplacé dans la position de levage de fonctionnement, empêché d'un mouvement de rappel dans la position de non-fonctionnement provoqué par une sollicitation de l'organe de maintien (28, 29).

3. Dispositif selon la revendication 2, **caractérisé en ce que** l'organe de maintien (28, 29) déplacé dans la position de fonctionnement est, par l'équipement (39, 40) de guidage transversal de l'organe de maintien (28, 29) déplacé dans la position de levage de fonctionnement et en vertu d'un support réciproque autobloquant de l'organe de maintien (28, 29) et de l'équipement (39, 40) de guidage transversal, empêché d'un mouvement de rappel dans la position de non-fonctionnement provoqué par une sollicitation de l'organe de maintien (28, 29).

4. Dispositif selon l'une des revendications précédentes, **caractérisé en ce que**, lors du mouvement de la position de levage de non-fonctionnement dans la position de levage de fonctionnement effectué par l'équipement (39, 40) de guidage transversal de l'organe de maintien (28, 29) par rapport à l'organe de maintien (28, 29) le long de l'axe de levage (25), l'organe de maintien (28, 29) est sollicité en force en sens contraire au sens de déplacement de l'équipement (39, 40) de guidage transversal.

5. Dispositif selon l'une des revendications précédentes, **caractérisé en ce que** le palier (31, 32) d'organe de maintien et l'équipement (39, 40) de guidage transversal de l'organe de maintien (28, 29) sont prévus sur une structure porteuse commune (30), sachant que l'équipement (39, 40) de guidage transversal est guidé en déplacement le long de l'axe de levage (25) sur la structure porteuse commune (30) par rapport à l'organe de maintien (28, 29) déplacé dans la position de non-fonctionnement et/ou par rapport à l'organe de maintien (28, 29) déplacé dans la position de fonctionnement, et **en ce que**, pour le mouvement de levage conjoint de l'organe de maintien (28, 29) déplacé dans la position de fonctionnement et de l'équipement (39, 40) de guidage transversal déplacé dans la position de levage de fonctionnement, la structure porteuse commune (30) peut être déplacée au moyen du moteur d'entraînement (19) le long de l'axe de levage (25) avec le palier (31, 32) d'organe de maintien prévu sur la structure porteuse commune (30) et l'équipement (39, 40) de guidage transversal prévu sur la structure porteuse commune (30).

6. Dispositif selon la revendication 5, **caractérisé en ce que** le palier (31, 32) d'organe de maintien est stationnaire sur la structure porteuse commune (30) dans la direction de l'axe de levage (25) par rapport à la structure porteuse commune (30), et **en ce que**, lors du mouvement de la position de levage de non-fonctionnement dans la position de levage de fonctionnement effectué le long de l'axe de levage (25) par l'équipement (39, 40) de guidage transversal de l'organe de maintien (28, 29) par rapport à l'organe de maintien (28, 29), l'organe de maintien (28, 29) est sollicité en force par l'intermédiaire de la structure porteuse commune (30) en sens contraire au sens de déplacement de l'équipement (39, 40) de guidage transversal.

7. Dispositif selon l'une des revendications précédentes, **caractérisé en ce qu'**il est prévu comme moteur d'entraînement (19) de l'entraînement d'organe de maintien une unité piston-cylindre avec un piston et un cylindre (20) comme éléments de moteur dont l'un est mobile par rapport à l'autre le long de l'axe de levage (25), et **en ce que** l'équipement (39, 40) de guidage transversal de l'organe de maintien (28, 29) est relié à l'élément de moteur de l'unité piston-cylindre qui est mobile par rapport à l'autre élément de moteur le long de l'axe de levage (25).

8. Dispositif selon l'une des revendications précédentes, **caractérisé en ce que** l'équipement (39, 40) de guidage transversal de l'organe de maintien (28, 29) présente au moins un galet de guidage (41, 42, 43) pour le guidage de l'organe de maintien (28, 29) lors du mouvement transversal de ce dernier.

9. Dispositif selon l'une des revendications précédentes, **caractérisé en ce que** l'organe de maintien (28, 29) est formé par un bras de levier d'un levier pivotant (35, 36), qui est monté à déplacement sur la structure porteuse (30) au moyen d'un palier (31, 32) d'organe de maintien réalisé sous forme de palier de pivotement, et qui, par l'équipement (39, 40) de guidage transversal déplacé par rapport au levier pivotant (35, 36) le long de l'axe de levage (25) au moyen du moteur d'entraînement (19), peut être pivoté d'une position de non-fonctionnement sous la forme d'une position de pivotement de non-fonctionnement dans une position de fonctionnement sous la forme d'une position de pivotement de fonctionnement, et/ou d'une position de fonctionnement sous la forme d'une position de pivotement de fonctionnement dans une position de non-fonctionnement sous la forme d'une position de pivotement de non-fonctionnement.

10. Dispositif selon la revendication 9, **caractérisé en ce qu'**il est prévu comme levier pivotant (35, 36) un levier pivotant à deux bras, sachant que l'organe de maintien (28, 29) est formé par un premier bras de levier du levier pivotant à deux bras et sachant que l'équipement (39, 40) de guidage transversal, déplacé le long de l'axe de levage (25) par rapport au premier bras de levier, sollicite un deuxième bras de levier (37, 38) du levier pivotant à deux bras et, de ce fait, le premier bras de levier formant l'organe de maintien (28, 29) peut être pivoté d'une position de pivotement de non-fonctionnement dans une position de pivotement de fonctionnement et/ou d'une position de pivotement de fonctionnement dans une position de pivotement de non-fonctionnement.

11. Dispositif selon l'une des revendications précédentes, **caractérisé en ce qu'**il est prévu deux organes de maintien (28, 29), qui sont chacun montés à déplacement sur une structure porteuse (30) au moyen d'un palier (31, 32) d'organe de maintien et qui, au moyen du moteur d'entraînement (19) de l'entraînement d'organe de maintien, peuvent être déplacés aussi bien avec un mouvement de levage effectué le long de l'axe de levage (25) qu'avec un mouvement transversal effectué en sens contraires par les organes de maintien (28, 29) en direction transversale à l'axe de levage (25),
- sachant que chacun des organes de maintien (28, 29) est guidé au moyen d'un équipement (39, 40) de guidage transversal pour effectuer le mouvement transversal et, en vertu du mouvement transversal guidé, peut être déplacé d'une position de non-fonctionnement dans une position de fonctionnement et/ou d'une position de fonctionnement dans une position de non-fonctionnement,
- sachant que, les organes de maintien (28, 29) étant déplacés dans la position de non-fonctionnement, les équipements (39, 40) de guidage transversal des organes de maintien (28, 29) peuvent, au moyen du moteur d'entraînement (19), être déplacés par rapport aux organes de maintien (28, 29) le long de l'axe de levage (25) d'une position de levage de non-fonctionnement associée à la position de non-fonctionnement des organes de maintien (28, 29) dans une position de levage de fonctionnement associée à la position de fonctionnement des organes de maintien (28, 29),
- et/ou sachant que, les organes de maintien (28, 29) étant déplacés dans la position de fonctionnement et les équipements (39, 40) de guidage transversal des organes de maintien (28, 29) étant déplacés dans la position de levage de fonctionnement, les équipements (39, 40) de guidage transversal peuvent, au moyen du moteur d'entraînement (19), être déplacés par rapport aux organes de maintien (28, 29) le long de l'axe de levage (25) de la position de levage de fonctionnement dans la position de levage de non-fonctionnement,
- sachant qu'en vertu du mouvement, produit au moyen du moteur d'entraînement (19), des équipements (39, 40) de guidage transversal de la position de levage de non-fonctionnement dans la position de levage de fonctionnement, les organes de maintien (28, 29) peuvent, les paliers (31, 32) d'organe de maintien étant stationnaires, être déplacés en sens contraires avec un mouvement transversal de la position de non-fonctionnement dans la position de fonctionnement,
- sachant qu'en vertu du mouvement, produit au moyen du moteur d'entraînement (19), des équipements (39, 40) de guidage transversal de la position de levage de fonctionnement dans la position de levage de non-fonctionnement, les organes de maintien (28, 29) peuvent, les paliers (31, 32) d'organe de maintien étant stationnaires, être déplacés en sens contraires avec un mouvement transversal de la position de fonctionnement dans la position de non-fonctionnement,
- et sachant que, au moyen du moteur d'entraînement (19), les organes de maintien (28, 29) déplacés dans la position de fonctionnement peuvent, conjointement avec les équipements (39, 40) de guidage transversal déplacés dans la position de levage de fonctionnement, être déplacés avec un mouvement de levage effectué le long de l'axe de levage (25).

12. Agencement mécanique pour apporter des pièces à une machine-outil (2) et/ou pour les évacuer de celle-ci, en particulier pour apporter des produits d'usinage (10) à une machine-outil (2) pour l'usinage de découpe de tôles et/ou pour les évacuer de celle-ci, avec une structure porteuse mobile (17) sur laquelle est prévu un dispositif (18) de manipulation de pièces présentant un organe de maintien (28, 29), sachant que le dispositif (18) de manipulation de pièces peut, par déplacement de la structure porteuse mobile (17), être déplacé dans une position de disponibilité à la réception dans laquelle l'organe de maintien (28, 29) déplacé dans une position de non-fonctionnement peut être déplacé dans une position de fonctionnement afin de maintenir une pièce d'oeuvre en position, et/ou sachant que le dispositif (18) de manipulation de pièces peut, par déplacement de la structure porteuse (17), être déplacé dans une position de disponibilité à la délivrance dans laquelle l'organe de maintien (28, 29) déplacé dans une position de fonctionnement peut être déplacé dans une position de non-fonctionnement afin de libérer une pièce d'oeuvre, **caractérisé en ce qu'**il est prévu comme dispositif (18) de manipulation de pièces un dispositif selon l'une des revendications 1 à 11.

13. Agencement mécanique pour l'usinage de pièces d'oeuvre, en particulier pour l'usinage de découpe de tôles, avec une machine-outil (2) pour l'usinage de pièces, le cas échéant pour l'usinage de découpe de tôles, et avec un agencement mécanique (3) pour l'apport et/ou pour l'évacuation de pièces, au moyen duquel des pièces d'oeuvre peuvent être apportées à la machine-outil (2) et/ou au moyen duquel des pièces d'oeuvre peuvent être évacuées de la machine-outil (2), **caractérisé en ce qu'**il est prévu comme agencement mécanique (3) pour l'apport et/ou pour l'évacuation de pièces d'oeuvre un agencement mécanique selon la revendication 12.
